# EUROPEAN PATENT APPLICATION

(11) **EP 4 843 839 A1**
(43) Date of publication of application: **25.11.2026**
(21) Application number: 25923618.0
(22) Date of filing: 25.04.2025
(51) Int. Cl.: B60R 16/023

(54) **AUTOMATIC DROP-AND-HOOK METHOD**

(30) Priority: 03.04.2025 CN 202510417560
(71) Applicant: Hamaton Automotive Technology Co., Ltd., Linping District Hangzhou, Zhejiang 311100 (CN)
(72) Inventor: ZHANG, Jianer, Hangzhou, Zhejiang 311100 (CN); JI, Zengchao, Hangzhou, Zhejiang 311100 (CN); PAN, Dinghai, Hangzhou, Zhejiang 311100 (CN); YANG, Shiqi, Hangzhou, Zhejiang 311100 (CN); HU, Zenan, Hangzhou, Zhejiang 311100 (CN)
(74) Representative: Hoyng Rokh Monegier B.V.
(86) International application number: PCT/CN2025/091141
(87) International publication number: WO 2026/207955

(57) **Abstract**

The present application relates to tractor-trailer coupling and uncoupling technology in the field of intelligent transportation management systems for commercial vehicles, and an automatic tractor-trailer coupling and uncoupling method. The present application solves the problem of cumbersome manual binding by forming a wireless mesh network of tractor and multiple trailers, and uses a number of received data packets and a first hop signal strength as the basis for automatic identification and matching. This increases the reliability and accuracy of the system identification and enables automatic identification, matching and sorting of transceivers of tractors with transceivers of single trailer or multi-trailer transceivers.

## Description

### CROSS-REFERENCE TO RELATED APPLICATION

The present application claims priority to Chinese Patent Application No. 2025104175605, filed on April 03, 2025, entitled "Automatic Tractor-Trailer Coupling and Uncoupling Method", which is hereby incorporated by reference in its entirety.

### FIELD

The present application relates to the transportation technology field of tractor-trailer coupling and uncoupling, and in particular, to an automatic tractor-trailer coupling method and uncoupling.

### BACKGROUND

In the transportation industry of tractor-trailer coupling and uncoupling, vehicle status monitoring is generally achieved through data communication between sensors and transceivers mounted on a tractor and a trailer. The trailer is provided with a transceiver to receive data from various sensors installed on the trailer. The transceiver then transmits the data to a transceiver installed on the tractor or terminal device (TBOX or Gateway) or display device via wired or wireless communication for data display or forwarding. The existing technology adopts the following three solutions: the first solution uses wired communication for data transmission, which requires reconnecting the data cable after the tractor-trailer coupling and uncoupling is performed. The second solution uses wireless transparent transmission for data transmission, but the solution is prone to data crosstalk in environments with multiple vehicles. The third solution uses wireless addressing communication for data transmission. However, this way requires re-binding the vehicle after each tractor-trailer coupling and uncoupling. This operation is prone to omission or error.

The above three solutions all have the disadvantage of insufficient intelligence. In addition, each solution has the following different disadvantages. The first solution: wired communication is adopted. This solution will increase product and installation costs. In the field, problems such as forgetting to connect the communication line and connectors or damage of them may cause system failure. The second solution: wireless transparent transmission communication is adopted. In this solution, when there are multiple trailers, crosstalk may occur in the data reception of a lead vehicle, and the reliability of data communication is not high. The third solution: wireless addressing for communication is adopted. This solution requires manual binding after each tractor-trailer coupling and uncoupling, which can lead to omissions and binding errors. In addition, it requires certain skills from the operator and is prone to binding errors.

Therefore, the industry urgently needs a solution that can automatically identify and match a tractor and a trailer or multiple trailers.

### SUMMARY

In view of the problems existing in the prior art, the present application provides an automatic tractor-trailer coupling and uncoupling method.

The present application provides an automatic tractor-trailer coupling and uncoupling method, which is applied to a target tractor. The target tractor and at least one trailer form a wireless mesh network; in the wireless mesh network, each trailer is used to transmit a data packet to the target tractor and to forward a data packet transmitted from other trailers to the target tractor, the data packet including a trailer identifier of a source trailer that transmits the data packet; a first trailer that forwards data packet is further used to record a first hop signal strength in the forwarded data packet, the first hop signal strength is a signal strength received by the first trailer after the data packet is transmitted, and the first hop signal strength remains unchanged during subsequent forwarding of the data packet; all trailers that forward a data packet are further used to record a forwarding hop count in the forwarded data packet, where the forwarding hop count represents a number of times the data packet has been forwarded, the number includes a current forwarding;
where the method includes an automatic trailer identification and matching process, and the automatic trailer identification and matching process includes:
determining a first preset value, where the first preset value is a total number of matching trailers set by the target tractor;
performing a matching process from a forwarding hop count of 0, where the matching process includes: identifying a trailer matching the target tractor based on one or more of the trailer identifier, forwarding hop count, and first hop signal strength included in the data packet received by the target tractor; and
in case that the number of trailers matching the target tractor has not reached the first preset value, incrementing the forwarding hop count by 1 and continuing the matching process until the number of trailers matching the target tractor reaches the first preset value.

In an embodiment, where identifying the trailer matching the target tractor based on one or more of the trailer identifier, forwarding hop count, and first hop signal strength included in the data packet received by the target tractor includes:
counting a number of data packets including a same trailer identifier and a same forwarding hop count; in case that the number of data packets is determined to be greater than a first threshold, calculating an average first hop signal strength based on a first hop signal strength recorded in the data packets including the same trailer identifier and the same forwarding hop count and the number of data packets; and
determining, based on the average first hop signal strength, a matching position of a trailer corresponding to the trailer identifier among all trailers matching the target tractor.

In an embodiment, where determining, based on the average first hop signal strength, a matching position of a trailer corresponding to the trailer identifier among all trailers matching the target tractor includes:
determining, for matching trailers with a same forwarding hop count, the matching position in descending order of average first hop signal strength; and
determining, for trailers matching different forwarding hop counts, the matching position in ascending order of forwarding hop count.

In an embodiment, the method further includes:
storing, in a local storage of the target tractor, a trailer identifier of the trailer matching the target tractor and matching positions corresponding to each trailer.

In an embodiment, the method further includes:
performing the automatic trailer identification and matching process in case that a first window time arrives; where the first window time refers to a preset time period for matching the target tractor with the trailer.

In an embodiment, the method further includes:
receiving a first blacklist transmitted from other tractor, where the first blacklist includes trailer identifiers of trailers that have been identified and matched with the other tractors; and
filtering, based on the trailer identifiers included in the first blacklist, received data packets.

In an embodiment, the method further includes:
periodically transmitting a second blacklist to the other tractors, where the second blacklist includes trailer identifiers of trailers that have been identified and matching the target tractor.

In an embodiment, the method further includes: an automatic trailer sorting process;
where the automatic trailer sorting process includes:
performing a sorting process from a forwarding hop count of 0, where the sorting process includes: calculating an average first hop signal strength based on a first hop signal strength recorded in data packets containing a same trailer identifier and a same forwarding hop count and the number of data packets; and determining, based on the average first hop signal strength, a sorting position of a trailer corresponding to the trailer identifier among all trailers matching the target tractor; and
incrementing the forwarding hop count by 1, and continuing the sorting process until all trailers matching the target tractor have their own sorting positions.

In an embodiment, where determining, based on the average first hop signal strength, a matching position of a trailer corresponding to the trailer identifier among all trailers matching the target tractor includes:
determining, for matched trailers with a same forwarding hop count, the sorting position in descending order of average first hop signal strength; and
determining, for trailers matching different forwarding hop counts, the sorting position in ascending order of forwarding hop count.

In an embodiment, the method further includes:
storing the sorting position in a local storage of the target tractor to replace the matching position.

In an embodiment, where the automatic trailer sorting process includes:
performing the automatic trailer sorting process in case that a second window time arrives; where the second window time refers to a preset time period used for sorting the target tractor and the trailer.

In an embodiment, the method further includes:
where the data packet further records synchronization information, and the synchronization information is used to characterize a synchronization status between the source trailer and the target tractor.

In an embodiment, where the synchronization information is first synchronization information, and the first synchronization information is a first running time of the source trailer; and
accordingly, the method further includes:
obtaining a second running time of the target tractor; and
filtering received data packets based on a difference between the first runtime and the second runtime, and a second threshold.

In an embodiment, where the synchronization information is second synchronization information, and the second synchronization information is generated and set to a valid value in case of being triggered by an external hardware signal; and
accordingly, the method further includes:
obtaining the second synchronization information, and filtering received data packets in case of determining that the second synchronization information is not a valid value.

The present application also provides a non-transitory computer-readable storage medium having a computer program stored thereon, which, when executed by a processor, implements the automatic coupling and uncoupling method as described above.

The present application also provides a computer program product, including a computer program that, when executed by a processor, implements the automatic coupling and uncoupling method as described above.

The automatic tractor-trailer coupling and uncoupling method provided by the embodiments of the present application solves the problem of cumbersome manual binding by forming a wireless mesh network of tractor and multiple trailers, and uses the number of received data packets and the first hop signal strength as the basis for automatic identification and matching. This increases the reliability and accuracy of the system identification and enables automatic identification, matching and sorting of transceivers of tractors with transceivers of single trailer or multi-trailer transceivers

### BRIEF DESCRIPTION OF THE DRAWINGS

In order to clearly illustrate the solutions of the present application, the accompanying drawings used in the description of the embodiments are briefly introduced below. It should be noted that the drawings in the following description are only some embodiments of the present application. For those of ordinary skill in the art, other drawings can be obtained according to these drawings without creative efforts.
FIG. 1 is a schematic diagram of a transceiver system provided in an embodiment of the present application;
FIG. 2 is a schematic diagram of a display system provided in an embodiment of the present application;
FIG. 3 is a first flowchart of an automatic tractor-trailer coupling and uncoupling method provided in an embodiment of the present application;
FIG. 4a is a second flowchart of an automatic tractor trailer coupling method provided in an embodiment of the present application;
FIG. 4b is a third flowchart of an automatic tractor-trailer coupling and uncoupling method provided in an embodiment of the present application;
FIG. 4c is a fourth flowchart of an automatic tractor-trailer coupling and uncoupling method provided in an embodiment of the present application;
FIG. 4d is a fifth flowchart of an automatic tractor-trailer coupling and uncoupling method provided in an embodiment of the present application;
FIG. 5 is a sixth flowchart of an automatic tractor-trailer coupling and uncoupling method provided in an embodiment of the present application;
FIG. 6 is a flowchart of an automatic trailer identification and matching process provided in an embodiment of the present application; and
FIG. 7 is a flowchart of an automatic trailer sorting process provided in an embodiment of the present application.

### DETAILED DESCRIPTION

In order to make the purpose, technical solutions and advantages of the present application clearer, the technical solutions according to the present application are clearly and completely described below in combination with the accompanying drawings in the present application. It should be noted that the described embodiments are some embodiments of the present application, rather than all the embodiments. Based on the embodiments of the present application, all other embodiments obtained by those skilled in the art without creative effort are within the scope of protection of the present application.

To achieve automatic identification and matching of a tractor and a trailer or multiple trailers, in the existing technology, when the trailer transceiver communicates with the transceiver on the tractor or terminal device (TBOX or Gateway) or display device via a wired way, the data communication line needs to be reconnected every time the vehicle performs a tractor-trailer coupling and uncoupling operation. This solution increases the system cost and installation cost. In addition, whether the communication line and connector are connected or damaged during use is also a risk that exists when using this solution. When the trailer transceiver communicates with the transceiver of the tractor, terminal device, or display in a wireless way, the transceiver of the trailer typically transmits data to the tractor device in a way of transparent transmission or binds trailer information to the tractor device using tools manually. The tractor device performs address filtering on the received trailer data to prevent crosstalk. In case that a wireless transparent transmission solution is used for communication, there is a risk of data crosstalk. In case that a manual binding way is used for communication, an additional operation may be added after tractor-trailer coupling and uncoupling. This operation is easy to overlook, forget, or there may be binding errors during the operation. In addition, the above solutions have problems in terms of cost, reliability and operational feasibility in multi-trailer applications. To address the problems existing in the prior art, each embodiment of the present application provides a solution to solve the problems of long-distance information transmission and variable positioning of trailer combinations encountered in a single trailer or a combination of multiple trailers. This enables intelligent and networked management of trailers in dynamic platooning environments during logistics transportation, including automatic matching, automatic positioning, monitoring, and safe operation. After vehicle reconfiguration, the transceivers of a tractor and transceivers of a trailer or transceivers of multiple trailer can automatically identify, match, and sort. The embodiments of the present application adopt a wireless mesh network solution to reduce product costs, and use the number of data frames and the RSSI value signal strength as the basis for matching and sorting to ensure the reliability and accuracy of the system.

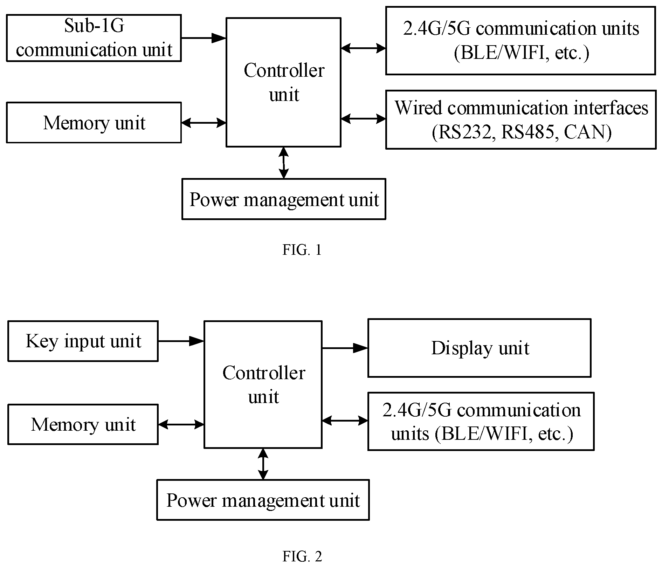

FIG. 1 is a schematic diagram of a transceiver system provided in an embodiment of the present application. FIG. 2 is a schematic diagram of a display system provided in an embodiment of the present application. As shown in FIG. 1 and FIG. 2, the embodiments of the present application adopt different system architectures according to different application scenarios. The first architecture is that both the tractor and the trailer are provided with transceivers, and the second architecture is that the tractor is provided with a display and the trailer is provided with a transceiver.

The tractor transceiver and trailer transceiver in the first solution and the trailer transceiver in the second solution have the same external structure and hardware design. The hardware structure is described below.

Sub-1G communication unit: responsible for receiving sensor data and communicating between transceivers.

2.4G and 5G communication units: responsible for communicating with smart devices, sensor devices, and devices with this communication function.

External communication interfaces: including RS232, RS485, CAN, and CANFD communication interfaces, used to communicate with external devices such as receiving commands, files, and response messages.

Processing unit: responsible for receiving, parsing, and processing various types of data, and managing various functions of the system (alarm management, fault management, etc.).

Storage unit: responsible for storing upgrade firmware and system setting parameters.

Power management unit: responsible for providing power to the above-mentioned units and controlling the charging and discharging of the battery.

The hardware structure of the tractor display in the second solution is described below.

2.4G and 5G communication units: responsible for communicating with smart devices, sensor devices, and devices with this communication function.

Display unit: responsible for interface display and human-computer interaction.

Key control unit: combined with the display unit to realize human-computer interaction functions.

Processing unit: responsible for receiving, parsing, and processing various types of data, and managing various functions of the system (alarm management, fault management, etc.).

Storage unit: responsible for storing upgrade firmware and system setting parameters.

Power management unit: responsible for providing power to the above-mentioned units and controlling the charging and discharging of the battery.

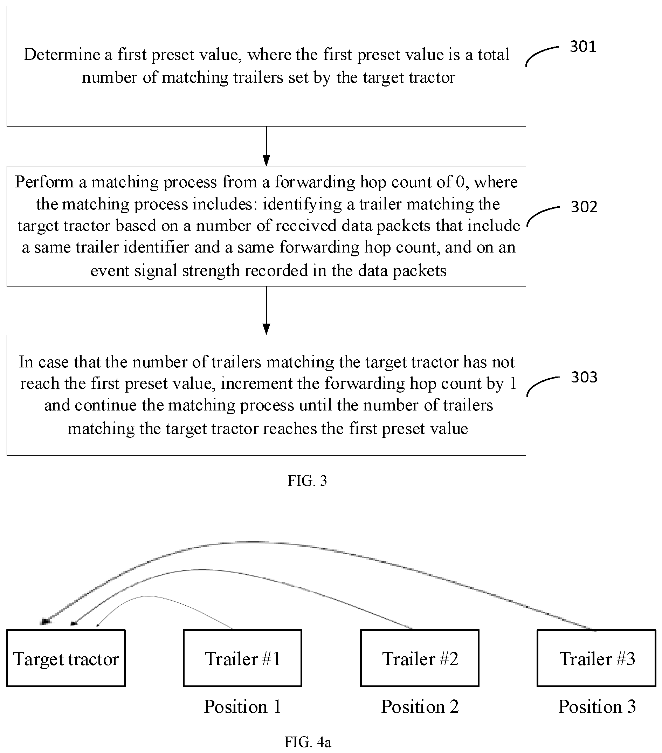

FIG. 3 is a first flowchart of an automatic tractor-trailer coupling and uncoupling method provided in an embodiment of the present application. The method is applied to a target tractor. The target tractor and at least one trailer form a wireless mesh network, such as a wireless MESH network; in the wireless mesh network, each trailer is used to transmit a data packet to the target tractor and to forward a data packet sent from other trailers to the target tractor, the data packet including a trailer identifier (e.g., trailer address) of a source trailer that transmits the data packet. Each of the target tractor and at least one trailer can be considered as a node in a wireless MESH network. In a wireless MESH network, each node can transmit a data packet to other nodes, and the data packet carries the node identifier of the node. The node receiving the data packet can then know from which node (such as the source trailer) the data packet was transmitted based on the node identifier (for example, the trailer identifier of the source trailer). The data packet may also include the node identifier of the destination node (e.g., the trailer identifier of the target tractor). The receiving node or forwarding node can then know the destination node of the data packet (e.g., the target tractor) and forward the data packet hop by hop to the target tractor. In the embodiment of the present application, each node in the wireless MESH network is assigned a window period. During the window period, only one data packet transmitted from another node can be forwarded. That is, data packet that have already been forwarded are ignored and not processed, so as to prevent the same data frames from oscillating in the network.

A first trailer that forwards data packet is further used to record a first hop signal strength in the forwarded data packet, the first hop signal strength is a signal strength received by the first trailer after the data packet is transmitted, and the first hop signal strength remains unchanged during subsequent forwarding of the data packet. Specifically, in order to identify trailers that can be matched and to better sort the matched trailers in the subsequent process, each trailer in the embodiment of the present application also has the following function: for any data packet, after the data packet is transmitted by the source node, the first trailer that forwards the data packet is also used to record the first hop signal strength in the forwarded data packet. The first hop signal strength refers to the signal strength received by the first trailer after a data packet is sent. Each time data packet is forwarded and received by another trailer, the strength of the first hop signal in the data packet remains unchanged. As can be seen from the above, the first hop signal strength refers to the signal strength when the first node trailer receives the data packet after it is transmitted, and does not refer to the signal strength when the target tractor finally receives the data packet forwarded by at least one trailer.

In addition, all trailers that forward a data packet are further used to record a forwarding hop count in the forwarded data packet, where the forwarding hop count represents a number of times the data packet has been forwarded, the number includes a current forwarding. Specifically, the forwarding represents the number of times a data packet is forwarded; that is, the forwarding hop count was incremented by 1 for each forwarding. For example, in case that a data packet is transmitted by a source trailer and is received directly by the target tractor without being forwarded by any other trailer, the forwarding hop count in the data packet is 0 because the data packet is not forwarded by any other trailer between the source trailer and the target tractor. For example, after a data packet is transmitted by a source trailer, it is forwarded by another trailer before being received by the target tractor. In this case, the forwarding hop count in the data packet is 1, because the data packet only passes through one trailer between the source trailer and the target tractor. The forwarding hop count in the data packet can be recorded by an intermediate trailer that forwarded the data packet, specifically by updating the forwarding hop count from 0 to 1. Similarly, no further elaboration is needed. After receiving a data packet, the target tractor can determine the number of hops the packet passed through to reach the target tractor by counting the number of hops.

Furthermore, if the target tractor receives a data packet and detects that the forwarding hop count is 0, it means that the target tractor was the first to receive the data packet after it was sent from the source trailer. In this case, the target tractor can use the signal strength when it receives the data packet as the first hop signal strength of the data packet. If it is detected that a forwarding hop count is 2, it means that the data packet was transmitted from the source trailer and forwarded by 2 trailers. Furthermore, based on the first hop signal strength included in the data packet, the signal strength of the first trailer to receive the data packet after it is sent out from the source trailer can also be determined.

As shown in FIG. 3, the automatic tractor-trailer coupling and uncoupling method includes an automatic trailer identification and matching process, and the automatic trailer identification and matching process may include the following steps.

Step 301, determine a first preset value, where the first preset value is a total number of matching trailers set by the target tractor.

A data connection is established with the tractor transceiver or tractor display via a dedicated app installed on the user terminal. Users can use the App to set the number of trailers that the tractor transceiver or display needs to be connected to, i.e., the first preset value. For example, if the total number of matching trailers set for the target tractor is 3, then the first preset value is 3. After the number of trailers to be connected is successfully set on the tractor transceiver or tractor display, the automatic trailer identification and matching function may be activated.

Step 302, perform a matching process from a forwarding hop count of 0, where the matching process includes: identifying a trailer matching the target tractor based on one or more of the trailer identifier, the forwarding hop count, and the first hop signal strength included in the data packet received by the target tractor.

Specifically, the automatic trailer identification and matching process may be performed in case that a first window time arrives. The first window time can be set in advance based on actual needs. When the first window time arrives, the target tractor receives data packets sent from all trailers. The first window time refers to a preset time period for matching the target tractor with the trailer.

The target tractor first matches the trailer that transmits data packets directly without forwarding, that is, it starts the matching process from the data packets with the forwarding hop count of 0. The target tractor counts all data packets with the forwarding hop count of 0 and divides these data packets according to the trailer identifiers they contain, thereby clearly dividing each data packet corresponding to the same trailer identifier and the forwarding hop count of 0. Then, based on the number of the data packets and the first hop signal strength included in each data packet, the trailer that matches the target tractor is identified. Specifically, the method may include: counting a number of data packets including a same trailer identifier and a same forwarding hop count; and in case that the number of data packets is determined to be greater than a first threshold, calculating an average first hop signal strength based on a first hop signal strength recorded in the data packets including the same trailer identifier and the same forwarding hop count and the number of data packets. That is, the first hop signal strength included in all data packets with the trailer identifier and the forwarding hop count of 0 is added up and divided by the number of data packets to obtain the average first hop signal strength. The method further includes determining, based on the average first hop signal strength, a matching position of a trailer corresponding to the trailer identifier among all trailers matching the target tractor.

For example, FIG. 4a is a second flowchart of an automatic tractor-trailer coupling and uncoupling method provided in an embodiment of the present application. As shown in FIG. 4a, there are three trailers near the target tractor: trailer #1, trailer #2, and trailer #3. In cast that the first window time arrives, the target tractor receives data packets transmitted from trailers #1, #2, and #3, and then begins the matching process.

Specifically, the matching process starts from the forwarding hop count of 0.

Assuming that trailers #1, #2, and #3 can all directly transmit data packets to the target tractor, the target tractor may count the number of data packets with the same trailer identifier and the same forwarding hop count of 0. For example, the number of data packets with the forwarding hop count of 0 transmitted from trailer #1 is N1, the number of data packets with the forwarding hop count of 0 transmitted from trailer #2 is N2, and the number of data packets with the forwarding hop count of 0 transmitted from trailer #3 is N3. Then, the target tractor compares the values of N1, N2, and N3 with the first threshold, respectively. Assuming that N1, N2, and N3 are all greater than the first threshold, proceed to the next step.

The target tractor calculates the sum of the first hop signal strengths included in the N1 data packets transmitted from trailer #1, and divide by N1 to obtain an average first hop signal strength corresponding to trailer #1. Similarly, the target tractor calculates the average first hop signal strength for trailer #2 and trailer #3 respectively. Assume that the average first hop signal strength received by the tractor from trailer #1 is Trailer[0].RSSI[0], the average first hop signal strength of trailer #2 is Trailer[1].RSSI[0], and the average first hop signal strength of trailer #3 is Trailer[2].RSSI[0]. After comparison, it can be known that Trailer[0].RSSI[0]>Trailer[1].RSSI[0]>Trailer[2].RSSI[0], so the matching positions of trailer #1, trailer #2 and trailer #3 are respectively "position 1", "position 2" and "position 3", which indicates that the distances between trailer #1, Trailer #2 and trailer #3 and the target tractor are distributed from near to far.

Step 303, in case that the number of trailers matching the target tractor has not reached the first preset value, increment the forwarding hop count by 1 and continue the matching process until the number of trailers matching the target tractor reaches the first preset value.

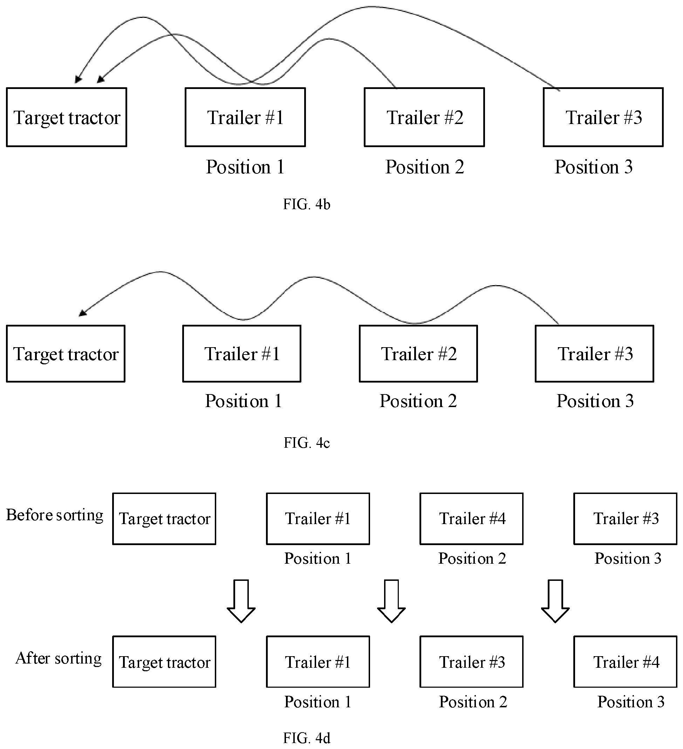

FIG. 4b is a third flowchart of an automatic tractor-trailer coupling and uncoupling method provided in an embodiment of the present application. As shown in FIG. 4b, based on the embodiment provided in FIG. 4a, assuming that N1 is greater than the first threshold, but N2 and N3 are not greater than the first threshold, then only trailer #1 is successfully matched with the target tractor at this time, but the total number of trailers set by the target tractor is 3, and the number 1 of trailers matching the target tractor has not yet reached the first preset value of 3, then the forwarding hop count can be incremented by 1 at this time, and the matching process can be continued. That is, if the forwarding hop count is 1, the matching process is performed again.

Specifically, if only Trailer[0].RSSI[0] is valid, and the number of data packets received by the trailers #2 and #3 is less than the first threshold that is preset, then it can be determined that trailer #1 is the trailer closest to the tractor, and the average first hop signal strength of hop 1 is compared. Since the signals from trailers #2 and #3 cannot be directly transmitted to the tractor, both trailers need to be forwarded by trailer #1 before reaching the tractor. Furthermore, in the embodiment of the present application, the first hop signal strength in the data packet refers to the signal strength when a frame of signal is first received. Each subsequent forwarding increments the hop count in the data frame, but the first hop signal strength remains constant. Therefore, the tractor compares the average first hop signal strength over hop 1 to determine which trailer is being compared to trailer #1. The following situations may occur during the comparison: $Trailer \left[1\right] . RSSI \left[1\right] > Trailer \left[2\right] . RSSI \left[1\right] .$

Based on the result, it is easy to determine that trailer #2 is closer to trailer #1, and trailer #3 is farther from trailer #1. Therefore, the order of arrangement is obtained through this comparison, that is, the matching positions of trailer #1, trailer #2, and trailer #3 are "position 1", "position 2", and "position 3" respectively, which indicates that the distances between trailer #1, Trailer #2 and trailer #3 and the target tractor are distributed from near to far.

FIG. 4c is a fourth flowchart of an automatic tractor-trailer coupling method provided in an embodiment of the present application. As shown in FIG. 4c, based on the embodiments provided in FIGS. 4a and 4b, if Trailer[1].RSSI[1] is valid, that is, the RSSI value of trailer #2 is valid, but the number of received data packets of trailer #3 is less than the first threshold that is set, then it is necessary to continue to compare the average first hop signal strength of hop 2.

Since trailer #3 cannot directly transmit its signal to trailer #1, the information from trailer #3 needs to be forwarded by trailer #2 before reaching trailer #1. As illustrated above, the signal from trailer #2 cannot directly reach the tractor. Therefore, trailer #3 is forwarded once by trailer #2 to trailer #1, and then forwarded once more by trailer #1 to the tractor. Thus, the data packet transmitted from trailer #3 reaches the tractor after two hops. At this point, the tractor transceiver compares the average first hop signal strength of hop 2. Since the average first hop signal strength only belongs to trailer #3, the sorting result can be easily determined. That is, the matching positions corresponding to trailers #1, #2, and #3 are "position 1", "position 2", and "position 3" respectively, which indicates that the distances between trailer #1, Trailer #2 and trailer #3 and the target tractor are distributed from near to far.

It can be understood that, in the embodiments of the present application, determining, based on the average first hop signal strength, the matching position of the trailer corresponding to the trailer identifier among all trailers matching the target tractor includes:
determining, for matching trailers with a same forwarding hop count, the matching position in descending order of average first hop signal strength; and
determining, for trailers matching different forwarding hop counts, the matching position in ascending order of forwarding hop count.

Comparing hop 0 means finding the trailer closest to the tractor; comparing hop 1 means finding the trailer closest to trailer number 1 (assuming trailer #1 is the first vehicle to be connected); comparing hop 2 means finding the trailer closest to trailer #2; comparing hop 3 means finding the trailer closest to trailer #3, and so on.

In an example, after the target tractor performs the automatic trailer identification and matching process to determine the matching positions corresponding to the matched trailers, the method may further include:
storing, in a local storage of the target tractor, a trailer identifier of the trailer matching the target tractor and matching positions corresponding to each trailer.

Based on the above embodiments, the first window time can be set to check whether a specified number of trailer transceivers have been matched, or whether any previously matched trailer transceivers have been lost. When it is detected that the number of trailers matching the target tractor has not reached the first preset value, the automatic identification process of trailer transceivers can be performed.

Based on the above embodiments, the method is used for solving the matching disorder problem caused by data crosstalk in the parallel operation of multiple vehicles, and the method may further include:
receiving a first blacklist transmitted from other tractor, where the first blacklist includes trailer identifiers of trailers that have been identified and matched with the other tractors; and
filtering, based on the trailer identifiers included in the first blacklist, received data packets.

Specifically, the tractor transceiver or tractor display may automatically filter data transmitted from trailer transceivers that are on a blacklist. The blacklist refers to trailer identifiers of trailers that have been matched by other nearby tractor transceivers or tractor displays, such as trailer transceiver addresses, to prevent other devices from making incorrect matches. For trailers not on the blacklist, the tractor transceiver or tractor display first filters trailer transceivers whose number of received data packets is less than a set threshold, then compares the average first hop signal strength of the received data, i.e., the average RSSI value, and selects the trailer with the highest signal strength as a matching trailer transceiver. Each automatic identification process may output a matching object until all unmatched or lost trailer transceivers are successfully matched.

In an embodiment, the method further includes:
periodically transmitting, by the target tractor, a second blacklist to the other tractors, where the second blacklist includes trailer identifiers of trailers that have been identified and matched with the target tractor.

In the embodiments of the present application, the tractor transceiver broadcasts the addresses of the trailer transceivers it has matched at an interval. The interval is configurable and is used for other receivers to build a blacklist of trailer transceivers.

FIG. 4d is a fifth flowchart of an automatic tractor-trailer coupling and uncoupling method provided in an embodiment of the present application. In some scenarios, for instance, three trailers that had already been matched were lost due to certain uncertain reasons. That is, the target tractor set the number of trailers to be 3, but after the previous automatic trailer identification and matching process, three trailers have been successfully matched, such as trailer #1, Trailer #2 and Trailer #3 respectively. However, during a certain window period, it was detected that trailer #2 no longer had a communication connection with the tractor, which means trailer #2 was lost. At this point, a new trailer identification and matching process needs to be continued. After identification and matching, trailer #4 was found. Based on the matching positions of the previous three trailers, trailer #4 occupied the "position 2" previously occupied by the lost trailer #2. However, it is unknown whether the distance between the newly matched trailer #4 and the target tractor is farther than that of trailer #1 and closer than that of trailer #3. Therefore, at this point, the automatic trailer sorting process provided in the embodiments of the present application needs to be executed.

The automatic trailer sorting process includes:
performing a sorting process from a forwarding hop count of 0, where the sorting process includes: calculating an average first hop signal strength based on a first hop signal strength recorded in data packets including a same trailer identifier and a same forwarding hop count and the number of data packets; and determining, based on the average first hop signal strength, a sorting position of a trailer corresponding to the trailer identifier among all trailers matching the target tractor; and
incrementing the forwarding hop count by 1, and continuing the sorting process until all trailers matching the target tractor have their own sorting positions.

It can be seen that the automatic trailer sorting process is similar to the automatic trailer identification and matching process provided in the above embodiment. It also calculates the average first hop signal strength from the data packets of hop 0, and then sorts the average first hop signal strength to determine the sorting position of each trailer. If the sorting cannot be completely completed based on the data packets of hop 0, then another round of calculation and sorting of the average first hop signal strength is performed from the data packets of hop 1, until all trailers matching the target tractor have their own sorting positions. In the above sorting process, for matched trailers with a same forwarding hop count, the sorting position is determined in descending order of average first hop signal strength; and for trailers matching different forwarding hop count, the sorting position is determined in ascending order of forwarding hop count.

For example, as shown in FIG. 4d, before sorting, the target tractor has successfully identified and matched with trailer #1, trailer #4, and trailer #3, and the matching positions corresponding to trailer #1, trailer #4, and trailer #3 are "position 1", "position 2", and "position 3", respectively. Start sorting:
Specifically, the matching process starts from a forwarding hop count of 0.

Assuming that trailers #1, #4, and #3 can all directly transmit data packets to the target tractor, the target tractor may count the number of data packets with the same trailer identifier and the same forwarding hop count of 0. For example, the number of data packets with a forwarding hop count of 0 sent from trailer #1 is N1, the number of data packets with a forwarding hop count of 0 sent from trailer #4 is N4, and the number of data packets with a forwarding hop count of 0 sent from trailer #3 is N3. Then, the target tractor compares the values of N1, N4, and N3 with the first threshold, respectively. Assuming that N1, N4, and N3 are all greater than the first threshold, proceed to the next step.

The target tractor calculates the sum of the first hop signal strengths included in the N1 data packets sent from trailer #1, and divide by N1 to obtain the average first hop signal strength corresponding to trailer #1. Similarly, the target tractor calculates the average first hop signal strength for trailer #4 and trailer #3 respectively. Assume that the average first hop signal strength received by the tractor from trailer #1 is Trailer[0].RSSI[0], the average first hop signal strength of trailer #4 is Trailer[3].RSSI[0], and the average first hop signal strength of trailer #3 is Trailer[2].RSSI[0]. After comparison, it can be known that Trailer[0].RSSI[0]>Trailer[2].RSSI[0]>Trailer[3].RSSI[0]. Therefore, after sorting, the corresponding sorting positions for trailer #1, trailer #3, and trailer #4 are "position 1", "position 2", and "position 3", respectively.

Assuming that N1 is greater than the first threshold, but N4 and N3 are not greater than the first threshold, then only trailer #1 is successfully matched with the target tractor at this time, but the total number of trailers set by the target tractor is 3, and the number 1 of trailers matching the target tractor has not yet reached the first preset value of 3, then the forwarding hop count can be incremented by 1 at this time, and the matching process can be continued. That is, if the forwarding hop count is 1, the matching process is performed again.

Specifically, if only Trailer[0].RSSI[0] is valid, and the number of data packets received by the trailers #4 and #3 is less than the first threshold that is preset, then it can be determined that trailer #1 is the trailer closest to the tractor, and the average first hop signal strength of hop 1 is compared. Since the signals from trailers #4 and #3 cannot be directly transmitted to the tractor, both trailers need to be forwarded by trailer #1 before reaching the tractor. Furthermore, in the embodiment of the present application, the first hop signal strength in the data packet refers to the signal strength when a frame of signal is first received. Each subsequent forwarding increments the hop count in the data frame, but the first hop signal strength remains constant. Therefore, the tractor compares the average first hop signal strength over hop 1 to determine which trailer is being compared to trailer #1. The following situations may occur during the comparison: $Trailer \left[2\right] . RSSI \left[1\right] > Trailer \left[3\right] . RSSI \left[1\right] .$

Based on the result, it is easy to determine that trailer #3 is closer to trailer #1, and trailer #4 is farther from trailer #1. Therefore, the order of arrangement is obtained through this comparison, that is, the sorting positions of trailer #1, trailer #3, and trailer #4 are "position 1", "position 2", and "position 3" respectively.

In an embodiment, the method further includes:
storing the sorting position in a local storage of the target tractor to replace the matching position.

In an embodiment, where the automatic trailer sorting process includes:
performing the automatic trailer sorting process in case that a second window time arrives. Specifically, once the automatic identification process is completed and a trailer transceiver is successfully matched, the automatic sorting function of the trailer transceiver may be activated. Before the automatic function is executed, a second window time may be enabled. The second window time can be set, and the automatic sorting function may be executed when the second window time arrives. The second window time refers to a preset time period used for sorting the target tractor and the trailer.

The embodiments of the present application design window times for automatic identification and automatic sorting, both of which are configurable to control the speed, accuracy, and reliability of automatic matching and automatic sorting.

In the various embodiments of the present application, the number of received data packets and the received signal strength are used as the basis for matching, identification and sorting. Since wireless signal strength is inversely proportional to distance and signal strength is directly proportional to reception rate, this method is feasible for determining whether a tractor and trailer are coupled or whether the multiple trailers are sorted.

In an embodiment,
where the data packet further records synchronization information, and the synchronization information is used to characterize a synchronization status between the source trailer and the target tractor.

Specifically, in the embodiments of the present application, the source trailer records synchronization information in the data packet to notify the target tractor of the synchronization status between the trailer and the target tractor.

The synchronization information may be first synchronization information, and the first synchronization information is a first running time of the source trailer. Accordingly, the method further includes:
obtaining a second running time of the target tractor; and
filtering received data packets based on a difference between the first runtime and the second runtime, and a second threshold.

Specifically, in the embodiments of the present application, a data area called a synchronization signal check field is defined in the data packet. Here, the synchronization signal is a time value, which represents the running time of the device that transmits the data packet. When the tractor device, including the tractor transceiver and the tractor display, checks the time synchronization field value of the received data packet, it subtracts the value from its own current running time value. The absolute value of the difference is compared with a duration threshold, namely the second threshold. This threshold can be changed. The smaller the threshold, the higher the recognition accuracy. Vehicles within the threshold may perform the process of comparing the number of subsequent data packets and the average first hop signal strength to perform vehicle identification, matching and sorting. Devices outside the threshold are ignored and do not execute the subsequent process.

Because the tractor device and trailer device use the same power supply, they are powered on and run simultaneously when the vehicle starts, so their running time should be consistent. However, the running times of the devices on other vehicles differ significantly from theirs. Therefore, this method can solve the problem of errors in the identification, matching, and sorting of tractor device when multiple vehicles are parked side by side in a parking lot environment. Just like the blacklist-based filtering mentioned earlier, the embodiment adds a layer of time synchronization filtering, which can make the identification, matching, and sorting more accurate and reliable.

The synchronization information may also be second synchronization information, and the second synchronization information is generated and set to a valid value in case of being triggered by an external hardware signal. Accordingly, the method further includes:
obtaining the second synchronization information, and filtering received data packets in case of determining that the second synchronization information is not a valid value.

Specifically, in the embodiments of the present application, a data area called the synchronization signal check field is defined in the data packet. The synchronization signal here is triggered by external hardware signal. When the hardware signal is triggered, the signal is valid; when the hardware signal is not triggered, the signal is invalid. The tractor device, including the tractor transceiver and tractor display, checks whether the synchronization signal of the received data packet is valid. If the synchronization signal is valid, it may proceed to the subsequent process of comparing the number of data packets and the average first hop signal strength for vehicle identification and sorting. If the synchronization signal is invalid, it may not proceed to the subsequent process.

Because the trailer transceiver has a signal line connected to the trailer brake signal line or the side light control signal line, when synchronization is required, pressing the brake or turning on the side light may trigger the synchronization signal. When the trailer transceiver detects that the synchronization signal is valid, the synchronization signal data field in the broadcast data frame may be set to a valid value. When the brake is not pressed or the side light is not turned on, the data field in the broadcast data frame of the trailer transceiver may be an invalid value. Therefore, this method can solve the problem of errors in the identification, matching, and sorting of tractor device when multiple vehicles are parked side by side in a parking lot environment. Just like the blacklist-based filtering mentioned earlier, the embodiment adds a layer of signal value synchronization filtering function, which can make the identification, matching, and sorting more accurate and reliable.

The method provided in the embodiments of the present application can realize automatic identification and matching between tractor transceivers and single trailer or multi-trailer transceivers. The tractor transceivers and single trailer or multi-trailer transceivers are networked in the form of a wireless MESH network. A method for filtering the same data packet and identifying the blacklist within a specified time are adopted to solve the problems of oscillation of the same data frames in the network and crosstalk in data reception.

Compared with existing technologies, the wireless MESH networking method solves the cost problems of wiring, wire harnesses, and connectors. The wireless MESH networking method and blacklist mechanism are used to solve the problems of long-distance data reception stability and data crosstalk. The system uses the number of received data packets and RSSI values as the basis for automatic identification and matching, increasing the reliability and accuracy of the identification of the system and solving the problem of cumbersome manual binding operations.

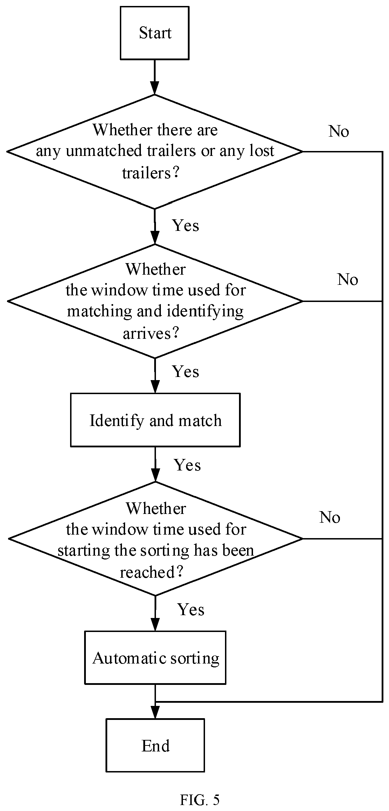

FIG. 5 is a sixth flowchart of an automatic tractor-trailer coupling and uncoupling method provided in an embodiment of the present application. As shown in FIG. 5, after the process starts, it first checks whether there are any unmatched trailers or whether any trailers are missing. If not, the process ends. If yes, the matching process begins when the matching window time arrives, and the automatic sorting process begins when the sorting window time arrives.

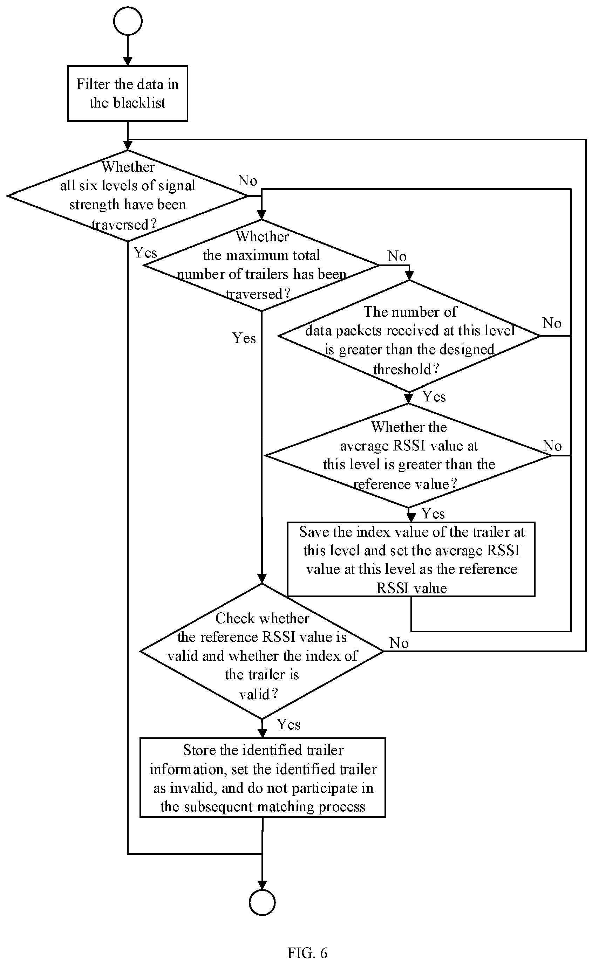

FIG. 6 is a flowchart of an automatic trailer identification and matching process provided in an embodiment of the present application. As shown in FIG. 6, in the automatic trailer identification and matching process, the data in the blacklist is first filtered. The blacklist refers to the addresses of trailer transceivers that have been matched by other nearby tractor transceivers or displays, to prevent the target tractor from being matched incorrectly.

Then, it is determined whether all six levels of signal strength have been traversed. If the entire traversal is not completed, then it is determined whether the maximum total number of trailers has been traversed. If the entire traversal is not completed, and the number of data packets received at that level is greater than the threshold, the process continues to determine whether the average first hop signal strength of that level is greater than the reference value. If it is greater than the reference value, the trailer identifier of the trailer at that level is saved, and the average first hop signal strength of that level is set as the reference value. If the total number of trailers has been traversed, check whether the reference value is valid and whether the stored trailer identifier is valid. If both are valid, the identified trailer information is stored and the identified trailer is set as invalid, so that it will not participate in the subsequent matching process.

Specifically, the embodiments of the present application design a multi-level signal strength identification strategy. The specific number of levels is configurable, with a default number of six levels representing the number of hops required for data transmission from the trailer transceiver to the tractor transceiver. The hop count represents the number of times a data packet is forwarded; each forwarding increments the hop count by 1, from 0 to 5 hops, for a total of six levels. This corresponds to a tractor connected to six trailers. Each level includes a sum of a first hop signal strength and a statistical parameter for the number of received data frames. The sum of the first hop signal strength represents the sum of the first hop signal strengths of each data packet. In practical applications, the first hop signal strength of each data packet is used as the basis for identification. The sum of signal strengths is divided by the total number of received data packets to calculate the average first hop signal strength of the device in each level. Then, the device with the strongest signal strength is compared and searched for in levels 0 to 5. First, level 0 is searched to see if there is a device in this level whose number of received data packets exceeds the set threshold. If so, the average first hop signal strength is compared to find the device with the strongest average first hop signal strength in level 0. If the device with the strongest average first hop signal strength in level 0 is found, the device is the level 0 trailer. If the device with the strongest average first hop signal strength in level 0 is not found, the device with the strongest average first hop signal strength in level 1 is searched. The method is used to successively find the trailer of level 1, the trailer of level 1, and so on until the trailer of level 5.

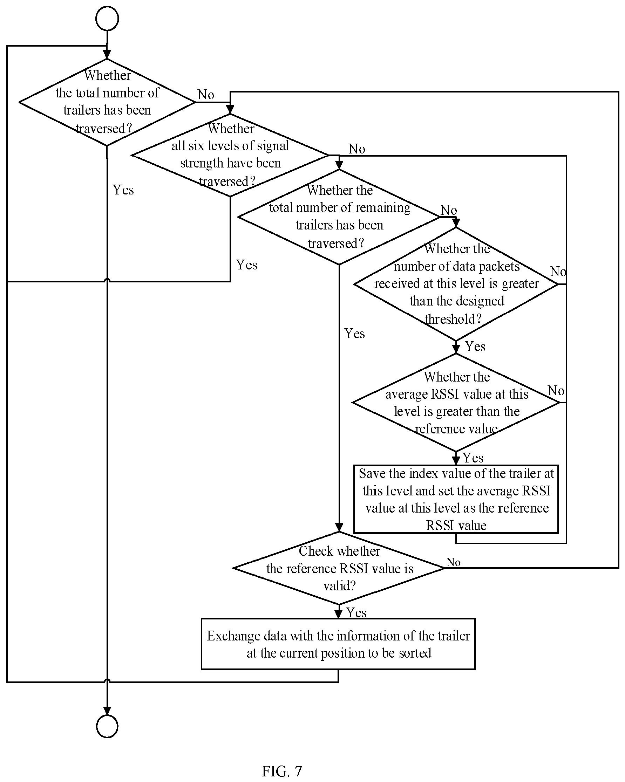

FIG. 7 is a flowchart of an automatic trailer sorting process provided in an embodiment of the present application. As shown in FIG. 7, in the automatic trailer sorting process, the automatic sorting process is similar to the automatic trailer identification and matching process in FIG. 6. The automatic sorting function is also based on the number of received data packets and the RSSI value of the first hop signal strength of the data packets. The sorting order starts from 0. First, it is checked whether the number of data packets transmitted from the trailer transceiver exceeds the set minimum threshold. If the number of received data packets is less than the set minimum threshold, the trailer is ignored and the information of the next trailer is checked. If the number of received data packets exceeds the threshold, it is compared whether the average RSSI value is greater than the reference RSSI value. If it is greater than the reference value, the index value of the trailer transceiver is recorded, and the average first hop signal strength of the data transmitted from the trailer transceiver is set as the reference value. The set number of trailers is checked in turn, and the maximum value is the sequence number of the corresponding trailer transceiver found in this loop. This method is repeated many times, and the number of times is the set number of trailer transceivers to be attached. After all loops are completed, the sorting of all trailer transceivers is completed.

In another aspect, the present application also provides a computer program product, which includes a computer program that may be stored on a non-transitory computer-readable storage medium. When the computer program is executed by a processor, the computer may execute the tractor-trailer coupling and uncoupling method provided in any of the above method embodiments.

In yet another aspect, the present application also provides a non-transitory computer-readable storage medium having a computer program stored thereon, which, when executed by a processor, implements the automatic tractor-trailer coupling and uncoupling method as described above.

Through the above description of the embodiments, those skilled in the art may clearly understand that each embodiment may be implemented by means of software plus necessary general-purpose hardware platform, or of course by hardware. Based on this understanding, the above technical solution, in essence or the part that contributes to the prior art, may be embodied in the form of a software product. This computer software product may be stored in a computer-readable storage medium, such as ROM/RAM, magnetic disk, optical disk, etc., and includes several instructions to cause a computer device (which may be a personal computer, server, or network device, etc.) to execute the methods described in each embodiment or some parts of the embodiments.

Finally, it should be noted that the above embodiments are only used to illustrate the technical solutions of the present application, and are not intended to limit them. Although the present application has been described in detail with reference to the foregoing embodiments, those skilled in the art should understand that modifications may still be made to the technical solutions described in each of the foregoing embodiments, or equivalent substitutions may be made to some of the technical features. Such modifications or substitutions do not cause the essence of the corresponding technical solutions to deviate from the scope of the technical solutions of each embodiment of this disclosure.

## Claims

1. An automatic tractor-trailer coupling and uncoupling method, applied to a target tractor, wherein the target tractor and at least one trailer form a wireless mesh network; in the wireless mesh network, each trailer is used to transmit a data packet to the target tractor and to forward a data packet transmitted from other trailers to the target tractor, the data packet comprising a trailer identifier of a source trailer that transmits the data packet; a first trailer that forwards a data packet is further used to record a first hop signal strength in the forwarded data packet, the first hop signal strength is a signal strength of the data packet received by the first trailer after the data packet is transmitted, and the first hop signal strength remains unchanged during subsequent forwarding of the data packet; all trailers that forward a data packet are further used to record a forwarding hop count in the forwarded data packet, wherein the forwarding hop count represents a number of times the data packet has been forwarded, the number comprises a current forwarding;
wherein the method comprises an automatic trailer identification and matching process, comprising:
determining a first preset value, wherein the first preset value is a total number of matching trailers set by the target tractor;
performing a matching process from a forwarding hop count of 0, wherein the matching process comprises: identifying a trailer matching the target tractor based on one or more of the trailer identifier, the forwarding hop count, and the first hop signal strength comprised in the data packet received by the target tractor; and
in case that the number of trailers matching the target tractor has not reached the first preset value, incrementing the forwarding hop count by 1 and continuing to perform the matching process until the number of trailers matching the target tractor reaches the first preset value.

2. The method of claim 1, wherein identifying the trailer matching the target tractor based on one or more of the trailer identifier, forwarding hop count, and first hop signal strength comprised in the data packet received by the target tractor comprises:
counting a number of data packets comprising a same trailer identifier and a same forwarding hop count; in case that the number of data packets is determined to be greater than a first threshold, calculating an average first hop signal strength based on a first hop signal strength recorded in the data packets comprising the same trailer identifier and the same forwarding hop count and the number of data packets; and
determining, based on the average first hop signal strength, a matching position of a trailer corresponding to the trailer identifier among all trailers matching the target tractor.

3. The method of claim 2, wherein determining, based on the average first hop signal strength, the matching position of the trailer corresponding to the trailer identifier among all trailers matching the target tractor comprises:
determining, for matching trailers with a same forwarding hop count, the matching position in descending order of average first hop signal strength; and
determining, for trailers matching different forwarding hop counts, the matching position in ascending order of forwarding hop count.

4. The method of claim 3, further comprising:
storing, in a local storage of the target tractor, a trailer identifier of the trailer matching the target tractor and matching positions corresponding to each trailer.

5. The method of any of claims 1 to 4, further comprising:
performing the automatic trailer identification and matching process in case that a first window time arrives; wherein the first window time refers to a preset time period for matching the target tractor with the trailer.

6. The method of claim 1, further comprising:
receiving a first blacklist transmitted from other tractors, wherein the first blacklist comprises trailer identifiers of trailers that have been identified and matched with the other tractors; and
filtering, based on the trailer identifiers comprised in the first blacklist, received data packets.

7. The method of claim 6, further comprising:
periodically transmitting a second blacklist to the other tractors, wherein the second blacklist comprises trailer identifiers of trailers that have been identified and matched with the target tractor.

8. The method of claim 1 or 2, further comprising: an automatic trailer sorting process;
wherein the automatic trailer sorting process comprises:
performing a sorting process from a forwarding hop count of 0, wherein the sorting process comprises: calculating an average first hop signal strength based on a first hop signal strength recorded in data packets comprising a same trailer identifier and a same forwarding hop count and the number of data packets; and determining, based on the average first hop signal strength, a sorting position of a trailer corresponding to the trailer identifier among all trailers matching the target tractor; and
incrementing the forwarding hop count by 1, and continuing the sorting process until all trailers matching the target tractor have their own sorting positions.

9. The method of claim 8, wherein determining, based on the average first hop signal strength, the sorting position of a trailer corresponding to the trailer identifier among all trailers matching the target tractor comprises:
determining, for matching trailers with a same forwarding hop count, the sorting position in descending order of average first hop signal strength; and
determining, for trailers matching different forwarding hop counts, the sorting position in ascending order of forwarding hop count.

10. The method of claim 8, further comprising:
storing the sorting position in a local storage of the target tractor to replace the matching position.

11. The method of claim 8, wherein performing automatic trailer sorting process comprises:
performing the automatic trailer sorting process in case that a second window time arrives; wherein the second window time refers to a preset time period used for sorting the target tractor and the trailer.

12. The method of claim 1,
wherein the data packet further records synchronization information, and the synchronization information is used to characterize a synchronization status between the source trailer and the target tractor.

13. The method of claim 12, wherein the synchronization information is first synchronization information, and the first synchronization information is a first running time of the source trailer; and
the method further comprises:
obtaining a second running time of the target tractor; and
filtering received data packets based on a difference between the first runtime and the second runtime, and a second threshold.

14. The method of claim 12, wherein the synchronization information is second synchronization information, and the second synchronization information is generated and set to a valid value in case of being triggered by an external hardware signal; and
the method further comprises:
obtaining the second synchronization information, and filtering received data packets in case of determining that the second synchronization information is not a valid value.

15. A non-transitory computer-readable storage medium having a computer program stored thereon, which, when executed by a processor, implements the automatic tractor trailer coupling method of any of claims 1 to 14.

16. A computer program product, comprising a computer program that, when executed by a processor, implements the automatic tractor trailer coupling method of any of claims 1 to 14.
